# EUROPÄISCHE PATENTANMELDUNG

(11) **EP 2 703 916 A2**
(43) Veröffentlichungstag der Anmeldung: **05.03.2014**
(21) Anmeldenummer: 13182475.7
(22) Anmeldetag: 30.08.2013
(51) Int. Cl.: G05B 15/02

(54) **Verfahren zur energetischen, tagesaktuellen Permanentanalyse von gebäudetechnischen Anlagen**

(30) Priorität: 30.08.2012 DE 102012215368
(71) Anmelder: energicos Systems LLP, 10587 Berlin (DE)
(72) Erfinder: Donath, Martin, Dr.-Ing., 18211 Ostseebad Nienhagen (DE); Grassert, Frank, Dr.-Ing., 18059 Rostock (DE)
(74) Vertreter: Gulde Hengelhaupt Ziebig & Schneider

(57) **Zusammenfassung**

Das erfindungsgemäße Verfahren zur energetischen, tagesaktuellen Permanentanalyse dient der fernüberwachten Nachhaltigkeitskontrolle bei energetisch optimierten gebäudetechnischen Anlagen mit dem Ziel einer ständigen und autarken Kontrolle der korrekten Funktionsweise, speziell der energieeffizienten Arbeitsweise.

Aufgabe der Erfindung ist es, ein Verfahren der eingangs genannten Art anzugeben, das Eigentümer von gebäudetechnischen Anlagen ständig und autark über die Energieeffizienz der Anlagen informiert und Unterstützung bei der Wartung bzw. Fehlerbehebung bei Abweichungen bieten kann.

Es werden Temperaturwerte und Verbrauchswerte jeder gebäudetechnischen Anlage erfasst. Zusätzlich werden Wetterdaten erfasst. Weiterhin werden Gebäudeinformationen und Soll-Werte aus einer vorangegangenen Anlagenanalyse - oder Anlagenoptimierung verwendet. Die Analyse der Ist-Kenndaten erfolgt zentral auf einem Server mit entsprechender Auswertungssoftware. Der Zugriff für den Nutzer auf die Daten erfolgt über eine Anwendersoftware bzw. über das Internet mit einem Webbrowser.

## Beschreibung

### Beschreibung

Das erfindungsgemäße Verfahren zur energetischen, tagesaktuellen Permanentanalyse dient der fernüberwachten Nachhaltigkeitskontrolle bei energetisch optimierten gebäudetechnischen Anlagen mit dem Ziel einer ständigen und autarken Kontrolle der korrekten Funktionsweise, speziell der energieeffizienten Arbeitsweise.

Für die Mehrzahl der gebäudetechnischen Anlagen existiert bisher keine Möglichkeit einer permanenten Kontrolle der Energieeffizienz. Für komplexe Gebäude werden Systeme (Gebäudeleittechnik - GLT) angeboten. Sie sammeln die Daten der Regler oder DDC-Unterstationen (direct digital control) im Gebäude über Feldbus ein (Feldebene) und bilden die Daten in einer dem Betreiber verständlichen Art und Weise graphisch ab. In einer Gebäudeleittechnik besteht die Möglichkeit, beliebige technische Ereignisse, wie der Ausfall von einem Aggregat, Unter- oder Überschreitung von Grenzwerten oder Zeitreaktionen als Störmeldung in verschiedenen Kategorien weiterzuverarbeiten. Meist werden Störmeldekategorien festgelegt (Wartungen, Alarme, Störungen), die sich in erster Linie durch die einzuhaltenden Reaktionszeiten und Prioritäten unterscheiden. Die klassische Aufgabe der betriebstechnischen Abteilung ist die Reaktion auf Störmeldungen und die Einleitung von Reparatur und Wiederherstellung der Funktion. Für die langfristige Beobachtung der Anlagenfahrweise bietet eine GLT meist eine Anbindung an eine Datenbank mit einer Langzeitarchivierung der Daten an. Mit häufig zusätzlichen Visualisierungsprogrammen können Lastgänge oder Temperaturverläufe zu Berichten zusammengefasst und analysiert werden. Normalerweise ergibt diese Darstellung in der GLT überhaupt erst die Möglichkeit, kompliziertere technische Anlagen und regelungstechnische Prozesse zu überwachen und optimiert angepasst betreiben zu können.

Die deutsche Veröffentlichung DE 102008034923 A1 offenbart ein Verfahren zum Steuern der klimatischen Bedingungen eines eine Heizung und/oder eine Klimaanlage enthaltenden Gebäudes. Hierzu werden neben der Erfassung der Temperatur über einen Sensor auch die Wetterdaten einer den Ort des Gebäudes einschließenden prognostizierten Großwetterlage und unter Nutzung der von dem Sensor erfassten physikalischen Größe durch Errechnen einer sich auf den Ort des Gebäudes beziehenden Kleinstwetterlageprognose in die Steuerung mit einbezogen. Es wird hier weder die Energieeffizienz mit einbezogen noch können ganze Gebäudekomplexe mit diesem System überwacht werden.

Bei dem Verfahren und der Anordnung zum Bestimmen des Wärmeanschlusswertes eines Gebäudes in DE 102004008521 B3 werden folgende Schritte durchgeführt: Messen bzw. Bestimmen von Abgaskonzentrationsparametern, Abgastemperatur, Außentemperatur, Brennstoffleistung jeweils über der Zeit in einem Beobachtungszeitraum von bestimmter Beobachtungsdauer; Ermitteln des Wirkungsgrades der Heizanlage über der Zeit aus Abgaskonzentrationsparameter, Abgastemperatur, Verbrennungslufttemperatur jeweils über der Zeit in dem Beobachtungszeitraum; Ermitteln der mittleren Außentemperatur in dem Beobachtungszeitraum; Ermitteln einer bei der mittleren Außentemperatur erzeugten mittleren Heizarbeit aus der Brennstoffleistung über der Zeit und dem Wirkungsgrad der Heizanlage über der Zeit in dem Beobachtungszeitraum; Ermitteln einer bei einer minimalen Außentemperatur zu erzeugenden maximalen Heizarbeit aus der mittleren Heizarbeit, einer minimalen Außentemperatur, einer mittleren Innentemperatur und der mittleren Außentemperatur in dem Beobachtungszeitraum und Ermitteln des Wärmeanschlusswertes der Heizungsanlage aus der maximalen Heizarbeit und der Beobachtungsdauer.

Sowohl aus ökonomischer als auch aus ökologischer Sicht muss eine korrekte Funktionsweise aller gebäudetechnischen Anlagen immer an der angestrebten Energieeffizienz gemessen werden. Die am Markt vorherrschenden GLT-Systeme sind dafür viel zu kostenintensiv, zu komplex und nicht primär auf die Einhaltung von Energieeffizienzkriterien, sondern auf die klassische Aufgabe des Störungsmanagements fokussiert. Weiterhin fehlen die automatisierten gebäude-, nutzer- und klimaspezifischen energetischen Auswertealgorithmen. Erst ein automatischer Bezug des Betriebsverhaltens der Anlage zur Energieeffizienz führt zu einem nachhaltigen Nutzen für den Eigentümer.

### Darstellung der Erfindung

Aufgabe der Erfindung ist daher, ein Verfahren der eingangs genannten Art anzugeben, das Eigentümer von gebäudetechnischen Anlagen ständig und autark über die Energieeffizienz der Anlagen informiert und Unterstützung bei der Wartung bzw. Fehlerbehebung bei Abweichungen bieten kann.

Gelöst wird diese Aufgabe durch das erfindungsgemäße Verfahren zur energetischen, tagesaktuellen Permanentanalyse von gebäudetechnischen Anlagen eines Gebäudebestandes mit den folgenden Schritten:
a. Eingabe von Soll-Kenndaten für den energetischen Zustand für jedes Gebäude und deren gebäudetechnischen Anlagen in das System und Erstellen eines charakteristischen Bildes der Messwerte,
b. Messdatenerfassung für unterschiedliche aktuelle Ist-Kenndaten direkt an den gebäudetechnischen Anlagen in kurzen Zeitintervallen,
c. Messdatenerfassung aktueller Klimadaten, welche direkt am Gebäude in kurzen Zeitintervallen gemessenen werden,
d. alternativ zu den aktuellen Klimadaten nach Schritt c) Nutzung von relevanten Klimadaten aus aktuellen Datenbanken über Telekommunikationsmedien,
e. Verarbeitung der Daten und Auswertung der Messwerte jeder gebäudetechnischen Anlage in Bezug auf den notwendigen Energieverbrauch innerhalb gesetzter Toleranzgrenzen mittels einer Analysesoftware durch Soll-Ist-Abgleich,
f. zentraler Datenaustausch über einen Server mittels einer Anwendersoftware mit der Möglichkeit, weitergehende Information zu Ursachen im Fehlerfall oder bei Abweichungen zu den gesetzten Toleranzgrenzen zur Verfügung zu stellen,
g. bildliche Darstellung der zentralen Überwachung des Energieverbrauchs aller gebäudetechnischen Anlagen im Soll-Ist-Vergleich.

Die Soll-Kenndaten für jedes Gebäude bestehen aus Gebäude-Informationen, wie Gebäudeanschlusswert, Nutzungsgrad der Wärmeerzeugung, Heizkurve, Gebäudemasse und weitere Sollwerte.

Die aktuellen Ist-Kenndaten der gebäudetechnischen Anlagen setzen sich aus aktuellen Verbrauchsdaten, aktuellen Anlagedaten und aktuellen Zustandsdaten zusammen. Die aktuellen Verbrauchsdaten werden von Strommengenzähler, Brennstoffmengenzähler, Wärmemengenzähler und Wassermengenzähler ermittelt. Die aktuellen Anlagedaten werden für Energieerzeugung, Energieverteilung und Energieübergabe ermittelt und die aktuellen Zustandsdaten werden aus einer Funktionsauswertung der einzelnen Geräte, wie Heizkessel, Speicher, Solaranlage und andere ermittelt. Ein Gesamtzustand aller gebäudetechnischen Anlagen ergibt sich aus den einzelnen aktuellen Zustandsdaten in bestimmten Zeiträumen.

Die aktuellen Klimadaten setzen sich insbesondere aus Außentemperatur und/oder Solarstrahlung, Windgeschwindigkeit, Windrichtung, Luftfeuchtigkeit, Niederschlagsmenge zusammen.

Die Daten aller Messstellen werden durch einen Datenlogger in kurzen Zeitintervallen erfasst und an die Analysesoftware weitergegeben.

Die Analysesoftware erstellt durch den Soll-Ist-Abgleich beim Überschreiten bestimmter Grenzwerte der festen und/oder der aktuellen Daten eine Fehlerdiagnose und errechnet den Mehrverbrauch der analysierten gebäudetechnischen Anlage. Die Anwendersoftware ermöglicht eine Schnittstelle zur Datenübertragung mit der Analysesoftware. Bei Abweichungen zu den gesetzten Toleranzgrenzen in den Messwerten wird durch die Analysesoftware an die Anwendersoftware ein Signal gesendet.

Durch die Anwendersoftware wird eine Anzeige in Ampelform bereitgestellt, so dass im Fehlerfall eine Zusammenfassung der aktuellen Betriebszustände aller gebäudetechnischen Anlagen dargestellt wird. Unabhängig davon oder gleichzeitig wird durch die Anwendersoftware eine Anzeige der aktuellen Betriebszustände als Verlaufsgrafik für Betriebsführung, Wartung und Fehlerbehebung nach Servicelevel dargestellt. Außerdem werden durch die Anwendersoftware in einem weiteren Fenster sämtliche gebäudetechnischen Anlagen gruppiert angezeigt.

Das Verfahren ist nicht anlagen- oder herstellerspezifisch und kann ohne Eingriff in die Anlage selbst installiert werden. Es werden Informationen von verschiedenen Komponenten der gebäudetechnischen Anlagen (Temperaturen, Verbräuche), Wetterinformationen sowie gebäude- und nutzerspezifische Informationen zusammengeführt und unmissverständlich und zeitnah der aktuelle Stand eines Systems und auch einer Gruppe von Systemen angezeigt. Es können Informationen mehrerer Anlagen zu einer Kernaussage mit einer leicht verständlichen Anzeige verknüpft werden. Bei Bedarf kann auf weiterführende Informationen zugegriffen werden.

Das System zeigt mit einer Ampelfunktion unmissverständlich und zeitnah den aktuellen Stand eines Systems und auch einer Gruppe von Systemen an. In einem weiteren Fenster kann bei Bedarf über eine Baumstruktur schnell auf jede Anlage zugegriffen werden.

### Ausführung der Erfindung

Die Erfindung wird anhand von Zeichnungen näher erläutert. Hierzu zeigt
Figur 1 eine schematische Darstellung des Verfahrens,
Figur 2 eine schematische Darstellung der Zustandsermittlung von gebäudetechnischen Anlagen und
Figur 3 eine schematische Darstellung der Anzeige für die energetische Permanentanalyse.

Durch das erfindungsgemäße Verfahren werden den Betreibern von gebäudetechnischen Anlagen tagesaktuelle Informationen über den energieoptimalen Betrieb sämtlicher Anlagen über eine Software oder einen Internetzugang zur Verfügung gestellt. Jede optimierte Anlage zeigt in ihren Messwerten ein charakteristisches Bild. Dieses Bild wird nach Abschluss der Optimierung und Installation der Software zur energetischen Permanentanalyse erstellt. Sobald die Messwerte unter Berücksichtigung der wetter-, nutzungs- und gebäudespezifischen Daten von gesetzten Toleranzgrenzen abweichen, sendet die Analyse-Software an den Betreiber ein Signal. Voraussetzung dafür ist eine Installation von Messtechnik für eine Erfassung von Ist-Kenndaten, wenn diese nicht schon vorhanden ist.

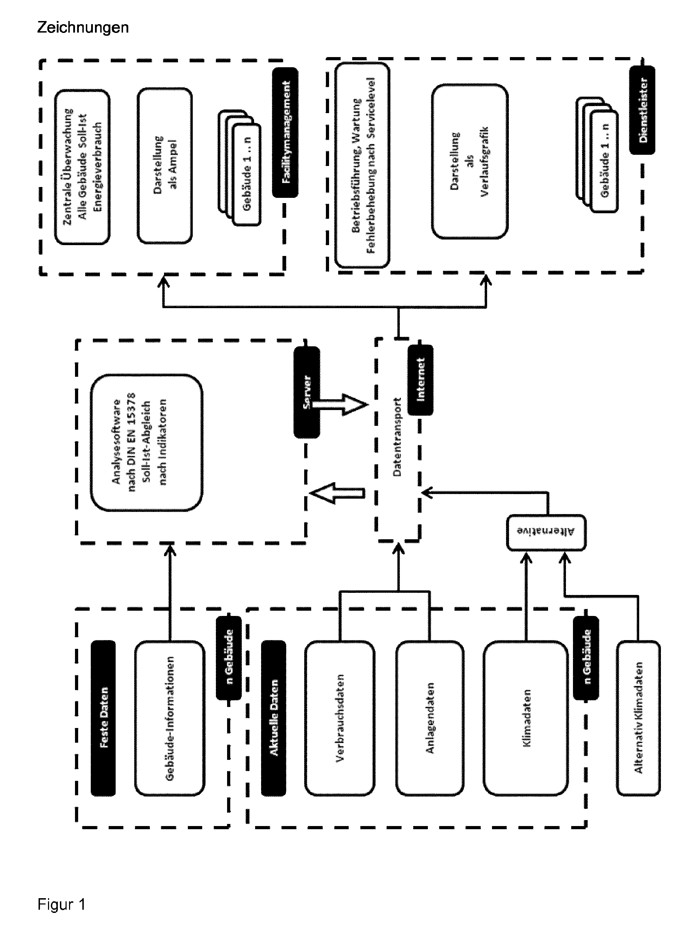

In Figur 1 erfolgt eine schematische Darstellung des Verfahrens. Das Verfahren setzt sich aus drei Komponenten zusammen: der Messdatenerfassung direkt an den gebäudetechnischen Anlagen mit einem minimalen Hardware-Aufwand, der Analysesoftware zur Verarbeitung der Daten und Auswertung in Bezug auf den Energieverbrauch und einer Anwendersoftware zur zentralen Überwachung eines Gebäudebestandes mit der Möglichkeit, tiefergehende Information im Fehlerfall zur Verfügung zu stellen. Kernmerkmal ist dabei, dass mit speziellen Algorithmen unter Einbeziehung von Wetterdaten sowie den anlagenspezifischen Daten, den gebäudespezifischen Daten und den nutzerspezifischen Daten der notwendige Energieaufwand bestimmt und die Einhaltung dieser Grenzwerte durch einen minimalen Messaufwand vor Ort geprüft wird. Weitere Algorithmen geben im Fehlerfall gezielte Hinweise auf Ursachen. Als beispielhafte gebäudetechnische Anlage wird der Betrieb von Heizungsanlagen näher erläutert.

### Messdatenerfassung:

Für die Bestimmung des Betriebsverhaltens der Heizungsanlage werden vor Ort Temperaturnehmer für Vor- und Rückläufe sowie z.B. Brennstoffmengenzähler installiert. Optional können auch Messstellen für Klimadaten installiert werden, deren Daten z.B. per Funk übertragen werden. Die Installation kann einfach und kostengünstig von Fachpersonal durchgeführt werden. Weiterhin wird ein Datenlogger installiert, der die Daten aller Messstellen in kurzen Zeitabständen, z.B. minütlich, erfasst und beispielsweise über eine Internetverbindung oder eine andere Telekommunikationsmöglichkeit weiterleitet.

Von jedem Gebäude werden zunächst die festen Soll-Kenndaten in das System eingegeben. Diese Daten sind in der Hauptsache Gebäude-Informationen wie Gebäudeanschlusswert, Nutzungsgrad der Wärmeerzeugung, Heizkurve, Gebäudemasse und weitere Sollwerte. Weiterhin werden die aktuellen Ist-Kenndaten des Betriebsverhaltens der Heizungsanlagen ermittelt. Hier sind von wesentlicher Bedeutung die aktuellen Verbrauchsdaten von Strommengenzähler, Brennstoffmengenzähler, Wärmemengenzähler und Wassermengenzähler, die Anlagedaten mit Energieerzeugung, wie beispielsweise Wärme, Wärmeverteilung und Wärmeübergabe und die Klimadaten, welche sich aus den Komponenten Außentemperatur, Solarstrahlung, Windgeschwindigkeit und Windrichtung, Luftfeuchtigkeit und Niederschlagsmenge oder aus einer Kombination einzelner dieser Daten zusammensetzen. Alternativ zu den direkt am Gebäude gemessenen Klimadaten können auch die relevanten Klimadaten aus anderen Quellen, beispielsweise dem Internet oder dem Deutschen Wetterdienst genutzt werden.

### Analysesoftware:

Die Analysesoftware wertet zentral auf einem Server die Daten aller Anlagen durch Soll-Ist-Abgleich nach bestimmten Indikatoren aus. Dazu verwendet sie die Messdaten zur Ermittlung des Betriebszustandes, die Klimadaten zur Ermittlung des notwendigen Energieaufwands sowie gespeicherte Anlagen-spezifische Daten. Bei Bedarf können Klimadaten aus dem Internet hinzugezogen werden. Mit den entwickelten Algorithmen ist ein akkurater Soll-Ist-Vergleich möglich, der in einer eindeutigen Aussage für jede Anlage endet.

Der Soll-Ist-Abgleich erfolgt automatisiert nach bestimmten Indikatoren. Wird ein bestimmter Grenzwert der festen und/oder der aktuellen Daten überschritten, wird eine Fehlerdiagnose automatisch erstellt und der Mehrverbrauch errechnet. Wenn der Mehrverbrauch gegenüber dem Sollverbrauch entsprechend aktuellem Klima, Nutzerverhalten, Gebäudespezifik und Anlagenspezifik den Grenzwert überschreitet, generiert das System eine Meldung. Beispielsweise erkennt die Software bei Auftreten einer hohen Windgeschwindigkeit, dass der Mehrverbrauch eine Folge der Wetterveränderung und keine Grenzwertüberschreitung ist.

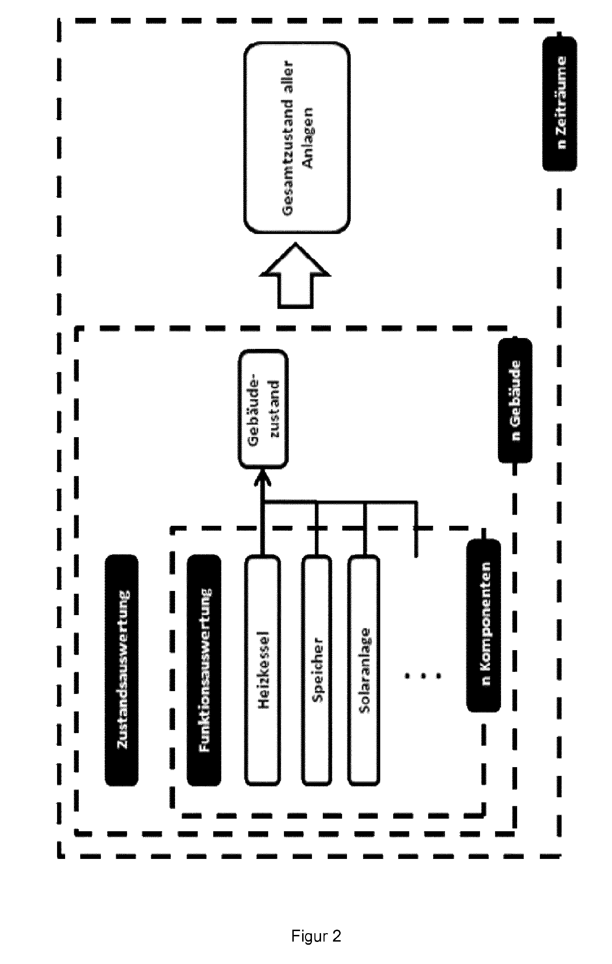

Entsprechend Figur 2 kann eine Zustandsermittlung aller gebäudetechnischen Anlagen erfolgen. Dazu gehören die Funktionsauswertung der einzelnen Geräte, wie Heizkessel, Speicher, Solaranlage und andere. Diese bestimmen unter anderem den energetischen Gebäudezustand eines einzelnen Gebäudes. Der energetische Gesamtzustand aller Gebäude ergibt sich aus den einzelnen Gebäudezuständen in bestimmten Zeiträumen. Über längere Zeiträume erfolgt eine Abschätzung von wiederkehrenden Fehlern, während über kurze Zeiträume eine Abschätzung von Ausnahme- und neuen Fehlern erfolgt.

### Anwendersoftware:

Die Anwendersoftware realisiert die Schnittstelle mit der Analysesoftware, beispielsweise über das Internet oder andere Telekommunikationseinrichtungen, und stellt für das Facilitymanagement die zentrale Überwachung aller gebäudetechnischen Anlagen im Soll-Ist-Vergleich des Energieverbrauchs bildlich dar. Sobald die Messwerte über gesetzte Toleranzgrenzen abweichen, sendet die Analyse-Software an den Betreiber ein Signal. Das Signal besteht primär aus einer kleinen Anzeige, die mittels einer übersichtlichen Ampelfunktion die Zusammenfassung der Betriebszustände aller Anlagen darstellt. Dazu bedeutet rot gleich Handlungsbedarf, gelb gleich Achtung, geringfügige Abweichung und grün gleich alles in Ordnung. Durch die einfache und übersichtliche Anzeige in Form einer Ampel wird der aktuelle Zustand der Anlagen angezeigt. Die Daten werden beispielsweise über Internet vom Server mit der Analysesoftware bezogen. Gleichzeitig werden für den Dienstleister die Daten für die Betriebsführung, Wartung und Fehlerbehebung nach Servicelevel als Verlaufsgrafik dargestellt. Der Zugriff für den Nutzer auf die Daten erfolgt über die Anwendersoftware bzw. über das Internet mit einem Webbrowser.

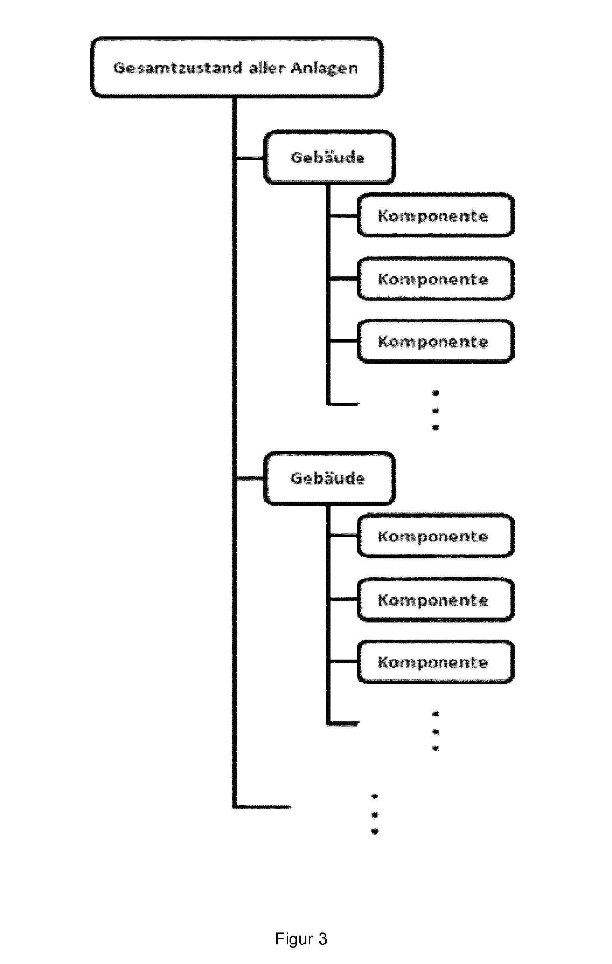

Sollen tiefergreifendere Informationen erfragt werden, so wird ein weiteres Fenster aufgerufen, in dem sämtliche Anlagen gruppiert aufgeführt werden. Jede Anlage ist dabei wiederum mittels der Ampeldarstellung gekennzeichnet, so dass sofort auf die eventuell fehlerbehaftete Anlage zugegriffen werden kann. Dazu bietet die Oberfläche zum einen die Möglichkeit, die gespeicherten Messdaten als Diagramme aufzurufen. Zum anderen können aber auch verschiedenste Auswertungskriterien wie zum Beispiel die Einhaltung von Spreizung, Ober- oder Untergrenzen, Nachtabschaltung usw. dargestellt werden und unterstützen somit eine schnelle Fehlersuche. Es ist möglich, den Zugriff auf diese Daten dem Dienstleister für Wartung und Reparatur zur Verfügung zu stellen, um vorab und möglichst schnell den Zustand persönlich bewerten zu können und eine schnelle Fehlerbehebung zu unterstützen. Die Darstellung in Figur 3 zeigt schematisch eine Baumstruktur der Anzeige für die energetische Permanentanalyse.

Neben diesen interaktiven Komponenten der Anwendersoftware können automatische Auswertungen eingerichtet werden. Dadurch ist keine kontinuierliche Kontrolle der Oberfläche notwendig. So können monatliche Auswertungen über den Gesamtzustand aller gebäudetechnischen Anlagen per Datenübertragung, wie E-Mail, per SMS oder auch andere heute noch nicht bekannte Übertragungsmedien versendet werden, um die korrekte Funktion zu belegen. Weiterhin können auch Warnungen bei Abweichungen per E-Mail oder auch per SMS versendet werden. Ebenso ist ein Zugriff auf die Daten per Smartphone oder Tablet-PC möglich.

## Patentansprüche

1. Verfahren zur energetischen, tagesaktuellen Permanentanalyse von gebäudetechnischen Anlagen eines Gebäudebestandes mit den Schritten:
a) Eingabe von Soll-Kenndaten für den energetischen Zustand für jedes Gebäude und deren gebäudetechnischen Anlagen in das System und Erstellen eines charakteristischen Bildes der Messwerte,
b) Messdatenerfassung für unterschiedliche aktuelle Ist-Kenndaten direkt an den gebäudetechnischen Anlagen in kurzen Zeitintervallen,
c) Messdatenerfassung aktueller Klimadaten, welche direkt am Gebäude in kurzen Zeitintervallen gemessenen werden,
d) alternativ zu den aktuellen Klimadaten nach Schritt c) Nutzung von relevanten Klimadaten aus aktuellen Datenbanken über Telekommunikationsmedien,
e) Verarbeitung der Daten und Auswertung der Messwerte jeder gebäudetechnischen Anlage in Bezug auf den notwendigen Energieverbrauch innerhalb gesetzter Toleranzgrenzen mittels einer Analysesoftware durch Soll-Ist-Abgleich,
f) zentraler Datenaustausch über einen Server mittels einer Anwendersoftware mit der Möglichkeit, weitergehende Information zu Ursachen im Fehlerfall oder bei Abweichungen zu den gesetzten Toleranzgrenzen zur Verfügung zu stellen,
g) bildliche Darstellung der zentralen Überwachung des Energieverbrauchs aller gebäudetechnischen Anlagen im Soll-Ist-Vergleich.

2. Verfahren nach Anspruch 1 **dadurch gekennzeichnet, dass** die Soll-Kenndaten für jedes Gebäude aus Gebäude-Informationen bestehen, wie Gebäudeanschlusswert, Nutzungsgrad der Wärmeerzeugung, Heizkurve, Gebäudemasse und weitere Sollwerte.

3. Verfahren nach Anspruch 1 **dadurch gekennzeichnet, dass** die aktuellen Ist-Kenndaten der gebäudetechnischen Anlagen sich aus aktuellen Verbrauchsdaten, aktuellen Anlagedaten und aktuellen Zustandsdaten zusammensetzen.

4. Verfahren nach Anspruch 3 **dadurch gekennzeichnet, dass** die aktuellen Verbrauchsdaten von Strommengenzähler, Brennstoffmengenzähler, Wärmemengenzähler und Wassermengenzähler ermittelt werden.

5. Verfahren nach Anspruch 3 **dadurch gekennzeichnet, dass** die aktuellen Anlagedaten für Energieerzeugung, Energieverteilung und Energieübergabe ermittelt werden.

6. Verfahren nach Anspruch 3 **dadurch gekennzeichnet, dass** die aktuellen Zustandsdaten aus einer Funktionsauswertung der einzelnen Geräte, wie Heizkessel, Speicher, Solaranlage und andere ermittelt werden.

7. Verfahren nach Anspruch 6 **dadurch gekennzeichnet, dass** sich ein Gesamtzustand aller gebäudetechnischen Anlagen aus den einzelnen aktuellen Zustandsdaten in bestimmten Zeiträumen ergibt.

8. Verfahren nach Anspruch 1 **dadurch gekennzeichnet, dass** die aktuellen Klimadaten sich insbesondere aus Außentemperatur und/oder Solarstrahlung, Windgeschwindigkeit, Windrichtung, Luftfeuchtigkeit Niederschlagsmenge zusammensetzen.

9. Verfahren nach Anspruch 1 **dadurch gekennzeichnet, dass** ein Datenlogger die Daten aller Messstellen in kurzen Zeitintervallen erfasst und an die Analysesoftware weitergibt.

10. Verfahren nach Anspruch 1 **dadurch gekennzeichnet, dass** durch den Soll-Ist-Abgleich der Analysesoftware beim Überschreiten bestimmter Grenzwerte der festen und/oder der aktuellen Daten eine Fehlerdiagnose erstellt und der Mehrverbrauch der analysierten gebäudetechnischen Anlage errechnet wird.

11. Verfahren nach Anspruch 1 **dadurch gekennzeichnet, dass** die Anwendersoftware eine Schnittstelle zur Datenübertragung mit der Analysesoftware ermöglicht.

12. Verfahren nach Anspruch 11 **dadurch gekennzeichnet, dass** bei Abweichungen zu den gesetzten Toleranzgrenzen in den Messwerten durch die Analysesoftware an die Anwendersoftware ein Signal gesendet wird.

13. Verfahren nach Anspruch 1 oder 11 **dadurch gekennzeichnet, dass** durch die Anwendersoftware eine Anzeige in Ampelform bereitgestellt wird, so dass im Fehlerfall eine Zusammenfassung der aktuellen Betriebszustände aller gebäudetechnischen Anlagen dargestellt wird.

14. Verfahren nach Anspruch 1 oder 11 **dadurch gekennzeichnet, dass** durch die Anwendersoftware eine Anzeige der aktuellen Betriebszustände als Verlaufsgrafik für Betriebsführung, Wartung und Fehlerbehebung nach Servicelevel dargestellt wird.

15. Verfahren nach Anspruch 13 oder 14 **dadurch gekennzeichnet, dass** durch die Anwendersoftware in einem weiteren Fenster sämtliche gebäudetechnischen Anlagen gruppiert angezeigt werden.
